# EUROPEAN PATENT SPECIFICATION

(11) **EP 4 010 143 B1**
(45) Date of publication and mention of the grant of the patent: **23.10.2024**
(21) Application number: 20849780.0
(22) Date of filing: 04.08.2020
(51) Int. Cl.: B23K 9/167, B23K 9/28, B23K 9/29

(54) **REMOVABLE ELECTRIC ARC WELDING TORCH HEAD WITH ADJUSTABLE ELECTRODE RECEIVER**
ABNEHMBARER ELEKTRISCHER LICHTBOGENSCHWEISSBRENNERKOPF MIT EINSTELLBAREM ELEKTRODENEMPFÄNGER
TÊTE DE TORCHE DE SOUDAGE À L'ARC ÉLECTRIQUE AMOVIBLE AVEC RÉCEPTEUR RÉGLABLE D'ÉLECTRODE

(30) Priority: 05.08.2019 US 201962882700 P
(43) Date of publication of application: 15.06.2022
(73) Proprietor: Rogers, Jesse, Penn Yan, NY 14527 (US)
(72) Inventor: Rogers, Jesse, Penn Yan, NY 14527 (US)
(74) Representative: Savi, Massimiliano
(86) International application number: PCT/US2020/044854
(87) International publication number: WO 2021/026132

(56) References cited:
- US-A- 2 395 228
- US-A- 3 116 406
- US-A- 4 924 065
- US-A1- 2004 050 824
- US-A1- 2011 278 274
- No further relevant documents disclosed

## Description

The present application relates to a removable electric arc welding torch head having an adjustable electrode receiver, see claim 1.

While a self-centering adjustable electrode receiver may be provided for a gas shielded welding torch, it is imperative that in order to facilitate the use of such devices, users (e.g., welders) be enabled to easily swap or switch heads used on conventional welding torches. For example, it is expensive to replace or swap out an entire inert gas welding torch in order to accommodate different electrode sizes. The disclosed welding torch head is suitable for use with multiple torch types, and as such provides the added advantage of an adjustable electrode receiver in a replaceable inert gas welding torch head. Thus, welders can now have the advantage of an adjustable electrode receiver without having to replace an entire welding torch - they only need to install the improved torch head in order to use a wide range of electrode sizes. The removable torch head includes electrode securing wedges that uniformly contact electrodes of various shapes, diameters, lengths and orientations. The adjustable electrode securing wedges provide a robust and uniform contact with the electrode and thus reduce the likelihood of resistive heating in the contact region.

### BACKGROUND AND SUMMARY

US 2011/278274 A1, according to its abstract, describes an arc welding torch having a variable electrode receiving aperture including a number of discrete wedges guided within a conical interior surface of a housing to enable the use of electrodes of various diameters without changing components of the torch. An adjusting collar engages the wedges and forms an adjustable opening for an electrode to be inserted therein. Rotation of a tailpiece of the torch handle adjusts the position of the wedges and secures the electrode in position.

Gas tungsten arc welding (GTAW), also known as tungsten inert gas (TIG) welding, is an electrical welding process that uses the arc from a tungsten electrode to produce heat sufficient to create a molten or plasma "puddle" to weld or fuse work pieces together. Inert gas welding can be used for a number of metals and their alloys and, as a result, is a very versatile welding process. However, the welding parameters and electrode sizes often need to be adjusted based upon the material being welded and welding conditions. For example, the diameter of the non-consumable tungsten electrode can vary between about 0.5 mm and about 6.4 mm (0.020 in. - 0.25 in.) depending upon the workpiece material and type of weld, and the length of the electrodes can range from about 75 mm to about 610 mm (3 in. - 24 in.). Conventional inert gas welding torches typically employ a range of collets to allow the user to disassemble the welding head and employ different collets for each electrode size - a time consuming process, particularly if the user needs to regularly switch electrode sizes.

In an inert gas welding process, the weld area is protected from atmospheric contamination by an inert shielding gas, such as argon. A welding power supply provides an electrical current that, upon creation of an arc between the electrode and the material being welded, produces concentrated thermal energy sufficient to weld the piece(s). The focused heat is sufficient to place the contact area, as well as an optional filler rod, into a plasma state. Heat is generated by the welding operation and as a result, the welding torch may require a cooling system. Air cooling systems are most often used for low-current operation, however, water cooling is sometimes required within the torch for TIG welding systems in order to dissipate heat in higher current applications or in applications requiring longer duty cycles.

As noted above, tungsten arc welding gas shielding torches employ dedicated collets and collet bodies for holding a specific diameter electrode within the torch head. Electrode collets are typically made from copper in a tubular shape and have at least two longitudinal gaps or slots to allow the diameter of the collet to be radially compressed when moved in relationship to the interior conical shape of an adjacent collet body. This compression of the collet minimally reduces the opening therein to engage and secure the electrode within the nominal internal radial area of the collet. Since the collet is compressed against the electrode over a relatively small area, the electrical current density per unit area is significant and substantial heat may be generated due to the electrically resistive connection to the electrode, which also may perpetuate peripheral arcing within the collet. Accordingly, the electrode, as well as the collet, have a tendency to erode over time due the effect of repetitive expanding and contracting caused by both the resistive and conducted heating and subsequent cooling. The situation is further aggravated due to the copper collet having a coefficient of thermal expansion of 17.6×10-6 mm/mm/°C (9.6×10-6 in/in/°F), whereas the tungsten electrode only expands about half as much (7.02×10-6 mm/mm/°C [3.9×10-6 in/in/°F]), thereby potentially causing a loose fitting electrode while welding, and therein further increasing the electrical resistance and/or causing the electrode to become unstable and to move within the torch head.

One inch (in, ") corresponds to 25.4 millimeters (mm).

Collets and collet bodies are typically provided in at least six aperture sizes to accommodate various diameters of the job specific electrode. Therefore, a significant limitation of the existing collets is that each electrode size requires a specific corresponding collet and collet body. Consequently, each time an alternate electrode diameter is required, the collet assembly must be interchanged as well. For example, it is required to have on hand at least one 1/16-inch collet and collet body to accompany a 1/16-inch tungsten electrode, as well as a 1/8-inch collet and collet body for a 1/8-inch electrode, and so forth. This unfortunately becomes a logistical challenge, as well as a time-consuming exercise each time the electrode is interchanged for another size. Moreover, the use of collets also prevents the reversal (swapping end-for-end) of electrodes that may develop a bead or enlarged tip that prevents it from passing through the collet opening.

When an electrode comes in direct contact with a work piece or filler wire the tip becomes contaminated by "foreign" metal that is transferred and adheres to the tip of the tungsten electrode. This added material produces a mushrooming of the tip and requires the electrode to be either reground or replaced. However, the use of a removable welding head with an adjustable electrode receiver, as disclosed herein, provides a sufficient opening or adjustability for the mushroomed end of the electrode to be flipped, end for end, and reinserted as the enlarged and contaminated end is passed through the adjustable opening. As a result an electrode may be used twice along between regrinding or replacement. Thus, it is a further objective to provide an electrode receiver that will allow insertion of an expanded/contaminated end of an electrode therethrough, and avoiding a problem with the use of sized collets to hold electrodes.

In one embodiment disclosed, the internal metal parts of a torch are preferably made of a conductive metal such as copper or brass in order to conduct electrical current and transfer heat with minimal resistance across a relatively small contact area. The body of the torch is made of heat-resistant, insulating ceramics, plastics and similar materials for both covering the metal components as well as providing insulation from heat and electricity to protect the welder. Additionally, provisions may be provided to allow a constant flow of the shielding gas to pass through the torch handle and electrode receiver to the work piece area in order to provide an inert gas region or atmosphere in proximity to the weld.

In the interest of versatility and convenience, a welder should be enabled to select and use any size electrode at any time, to effect optimal welding, without the need to reconfigure the electrode receiver within the torch head. In other words, the configuration of the torch head and associated housing should not dictate the size or shape of an electrode. Therefore, an adjustable electrode receiver, that can be varied as needed to accommodate a variety of different size electrodes, provides a distinct advantage when using an electric welding torch, such as the case with TIG welding.

The embodiments according to the present invention disclosed herein are directed to a removable torch head with an adjustable or variable electrode receiver that replaces conventional heads and eliminates the conventional collets in order to enable use of a plurality of electrode sizes.

In accordance with the present invention, a removable electric arc welding torch head having an adjustable electrode receiver is defined in claim 1, and comprising: a hollow plunger, having a first end for threadable connection to a welding torch; a nozzle seat (e.g., high-temperature plastic such as Teflon^{®}), surrounding and operatively connected about the first end of the plunger; a torch body including a tapered interior region, a plurality of apertures to permit gas flow therethrough, and a threaded inside diameter to permit the operative engagement (e.g., threadable engagement) of a chuck back plate thereon, the chuck back plate having an outer diameter for engaging the inner diameter of the torch body, a plurality of radially positioned electrode securing wedges (jaw pieces) forming an electrode aperture therebetween within the tapered interior region of the torch body such that each securing wedge can traverse, in unison, a conical interior surface of the tapered region in a longitudinal direction to form a variable aperture (jaw) therebetween, said securing wedges being further contacted on an end thereof by a plunger thrust cup, the thrust cup in further combination with the plunger and back plate, translating rotation of the plunger relative to the back plate into linear motion of the thrust cup in contact with the electrode securing wedges, and further providing a clamping motion of the electrode securing wedges as a result of their contact with the tapered surface, each of said electrode securing wedges biased away from one another (and toward the conical interior surface of the tapered region), by at least one biasing member therebetween, and an internal conical surface in contact with each securing wedge, said securing wedges further providing electrical contact between an electrode and the conical surface of the torch body; and a nozzle, encircling the torch body and operatively attached at one end thereof to the nozzle seat.

Further preferred embodiments of the present invention are defined in the dependent claims.

Other and further objects, features and advantages will be evident from a reading of the following specification and by reference to the accompanying drawings forming a part thereof, wherein the examples of the presently preferred embodiments are given for the purposes of disclosure.

### BRIEF DESCRIPTION OF THE DRAWINGS

FIG. 1 is a perspective view of TIG welding torch in accordance with disclosed embodiments, showing two welding torches to which the replaceable head may be attached, along with a plurality of plunger pieces suitable to adapt the removable head to various torch types;
FIG. 2 is a perspective view of an embodiment of the inert gas welding torch head with an adjustable electrode receiver attached to a conventional torch handle;
FIG. 3 is a perspective view of the embodiment of FIG. 2 with the gas nozzle removed and with a different diameter welding electrode inserted into the adjustable electrode receiver;
FIG. 4 is an enlarged perspective view of the torch with the plunger and nozzle seat components installed on a torch in accordance with a disclosed embodiment;
FIGS. 5 - 7 are illustrative examples of a replaceable inert gas welding head with a torch head body and associated components in accordance with a disclosed embodiment;

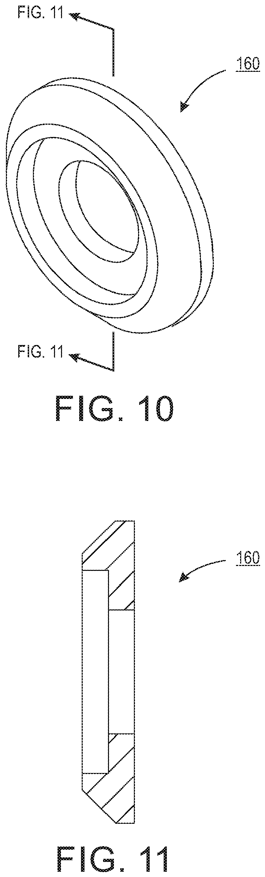

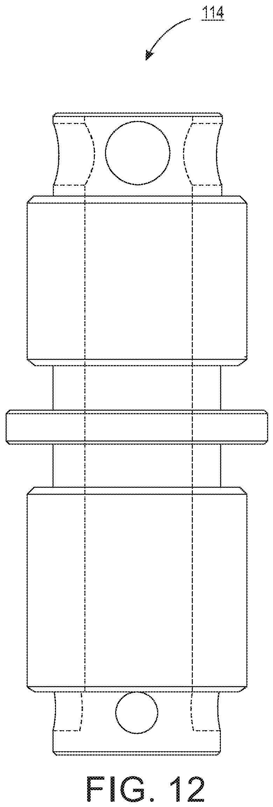

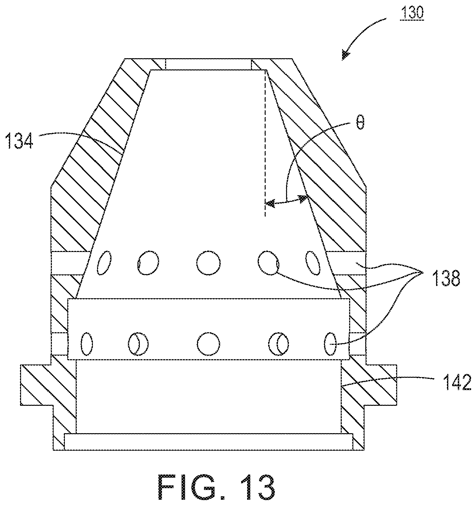

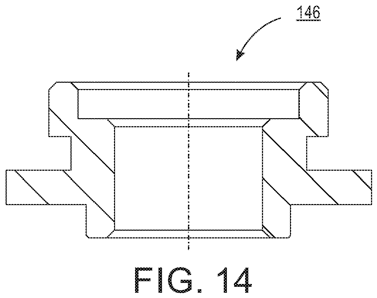

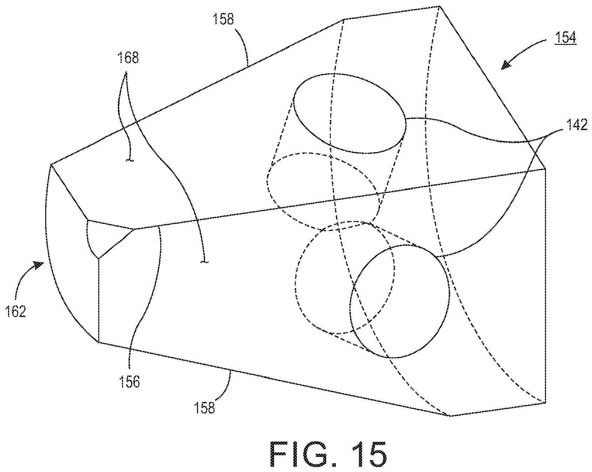

FIGS. 8 - 16 are detailed drawings of various components parts illustrated in FIGS. 1 - 7 in accordance with a disclosed embodiment; and

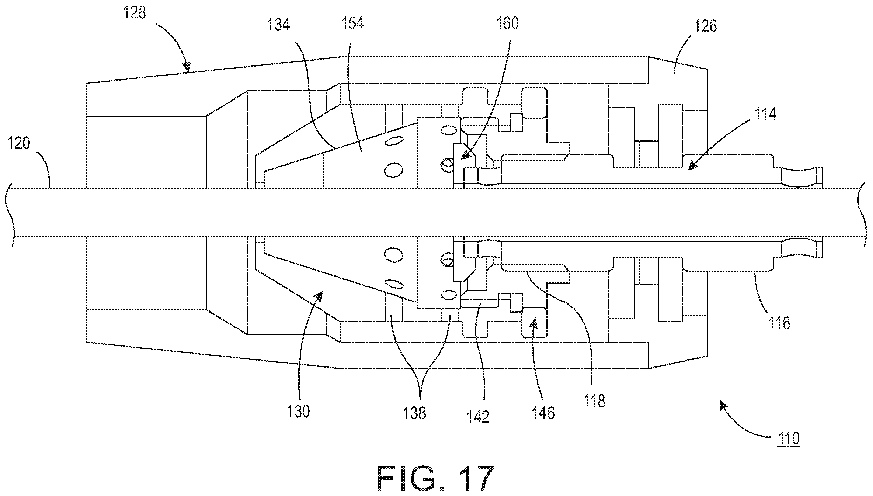

FIG. 17 is a cross-sectional view of a removable torch head in accordance with a disclosed embodiment including a torch head body with an adjustable electrode receiver.

The various embodiments described herein are not intended to limit the invention to those embodiments described. On the contrary, the intent is to cover all alternatives, modifications, and equivalents as may be included within the spirit and scope of the welding torch and adjustable electrode receiver as defined by the appended claims.

### DETAILED DESCRIPTION

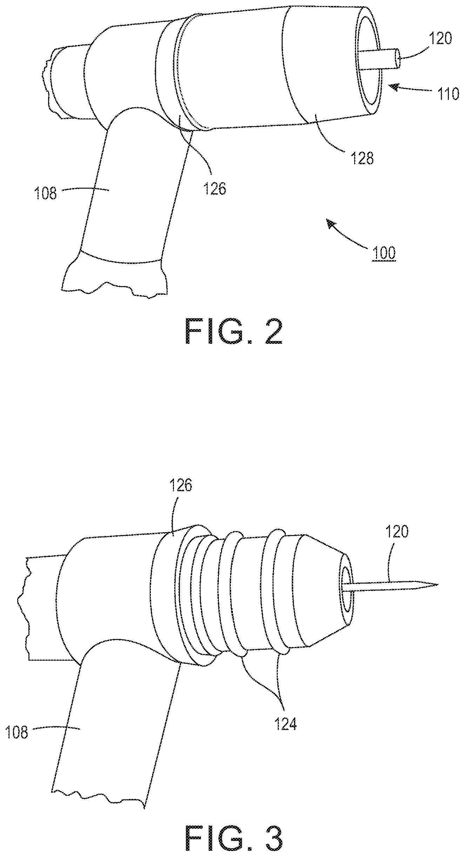

Referring now to the drawings where the showings are for the purpose of illustrating a preferred embodiment of the removable torch head with an adjustable electrode receiver. As will be appreciated, the disclosed welding torch head is one part of a gas tungsten arc welding system. In one embodiment such a welding system includes a power supply, an inert gas supply, a water/liquid cooler and a torch assembly including a torch head 100 as depicted in FIG. 2, for example. In practice, a workpiece (not shown) is electrically connected to the power supply to provide either - DC, +DC or AC through a clamp and a return cable electrically connected to the workpiece (not shown). Torch **100** provides means for delivering the inert gas as well as an arc formed within an air gap between the tip of the tungsten electrode **120** and the work piece, where the arc is sufficient to generate the heat required to fuse the work pieces together. Torch **100** may be further connected to a water or chilled liquid supply for cooling of the torch when a high current and/or an extended duration welding operation is performed.

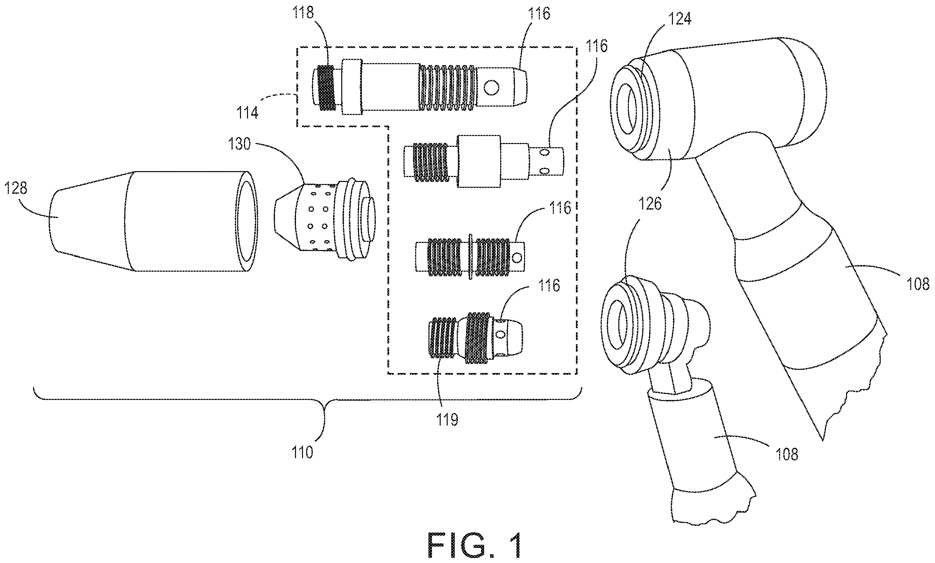

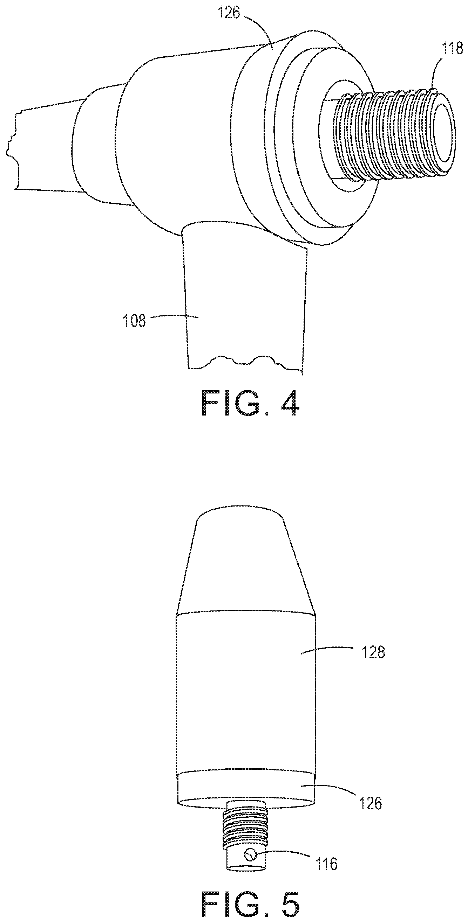

The operative mechanical elements of the adjustable electrode receiver reside within a housing of the torch **100,** particularly a torch handle **108** to which a removable torch head **110** is attached. As illustrated in the figures, the removable torch head **110** includes a hollow plunger **114** adapted to fit the torch body (see e.g., FIG. 1) and having a first end **116** for threadable connection to welding torch **100.** A second threaded end **118** of the plunger is for coupling to and interacting with the torch head body **130.** When attached to the welding torch, for example as depicted in FIGS. 1 and 5, the hollow plunger **114** extends outward and provides a stem over which a surrounding nozzle seat **126** can be operatively connected about the exposed threaded end **118** of the plunger. In order to permit use of the removable torch head **110,** end **116** of the hollow plunger **114** must be suitable for threaded connection to a conventional torch. While depicted in FIG. 1 with at least two different torch types, such as an HW20 torch and a WP20 torch, it will be appreciated that the removable torch head disclosed herein may be suitable for use with other torches as well. Although not specifically illustrated, it will be appreciated that the rear or back end of the torch typically includes a tailpiece that encloses that portion of the electrode extending through the removable head.

The nozzle seat **126** and the nozzle **128** may be made of a number of materials suitable for high-temperature use, such as machinable or molded ceramic or Pyrex^{®} materials or high-temperature plastics such as glass-filled polytetrafluoroethylene (PTFE) or Teflon^{®}. The inert gas, supplied to the torch and into the removable torch head **110,** flows through the hollow interior of plunger **114,** where the gas is then directed into the torch head body **130** and nozzle **128,** and then out around the electrode in the region of an electrical arc extending between the work piece and the electrode.

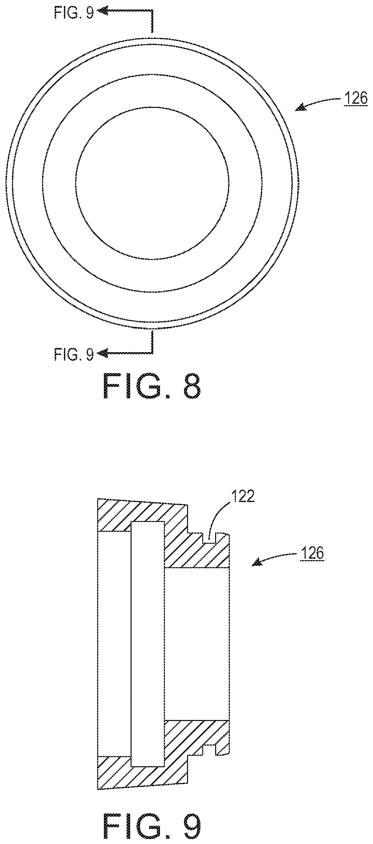

As depicted for example in FIGS. 3-4, the nozzle **128** is associated with the torch body and nozzle seat **126,** and is removably affixed to the nozzle seat and torch head body **130** by friction fit thereto. As an alternative to the friction fit between the nozzle seat and the nozzle, also contemplated is a threaded connection or a bayonet-type connection therebetween. Moreover, in one embodiment the friction fit with the torch body may be provided via O-rings **124** or similar elements encircling the torch body, for example an O-ring within O-ring retaining groove **122** as depicted in FIG. 9.

Referring also to FIG. 18, the removable torch **110** head also includes a torch head body **130** that includes a tapered interior region **134,** a plurality of apertures **138** to permit gas flow therethrough, and a threaded inside diameter **142** to permit the operative engagement (e.g., threadable) of a chuck back plate **146** thereon. The chuck back plate **146** has, in one embodiment, a threaded outer diameter for engaging the threaded inner diameter of the torch body. Also within removable head **130** are at least two and typically at least three or more radially positioned electrode securing wedges (jaw pieces) **154** forming an electrode aperture therebetween within the tapered interior region of the torch body such that each securing wedge can traverse or slide, in unison, along the conical interior surface of the tapered region **134** in a longitudinal direction to form a variable aperture (jaw) therebetween. The securing wedges **154** being further contacted on an end thereof by a plunger thrust cup **160.** The thrust cup **160,** in further combination with the plunger **114** and back plate **146,** translate rotation of the plunger relative to the back plate into linear motion of the thrust cup in contact with the electrode securing wedges, and further provide a clamping motion of the electrode securing wedges against the electrode **120** as a result of their sliding contact with the tapered surface.

In operation, electrode **120** is inserted along the interior surface of wedges **154** and clamped therein by a force applied to the interior ends of the wedges by plunger thrust cup **160.** In the depicted embodiment, a compressive force is provided to the thrust cup **160** by plunger **114** being rotated relative to the torch head body **130,** thereby advancing the wedges **154** in response to the rotation of the head and closing the jaw formed by the wedges about the electrode. When the plunger is rotated in the opposite direction, the plunger is retracted relative to the head body **130,** and as a result the pressure applied to the wedges is removed. In the absence of pressure from the plunger **114** the electrode wedges **120,** under the force of biasing member (spring) **164,** slide up the jaw to expand or open the jaw. In other words, as the plunger **114** backs away from the thrust cup the biasing springs **164** force the electrode wedges apart, causing the wedges to slide the jaws back up and outward along the inner cone and keeping them against the thrust cup. There is no pulling action of the plunger or thrust cup, but the biasing force causes the wedges to move to the largest diameter position. The springs just keep everything under tension and moving in the cone during retraction. In the unlikely event that the wedges are temporarily "fixed" in one position, a slight tap with the tungsten electrode causes them to snap back and continue moving for retraction, but typically they slide back.

The rate of change of the orifice diameter formed by wedges **154** is a function of the pitch of the thread, or turns per inch (TPI) on the mating surfaces of the chuck backing plate **146** and end **118** of the hollow plunger **114,** as well as included angle Θ or slope, of the posterior surface **162** of the wedge **154.** The corresponding interior conical surface **134** shares a common slope angle Θ, typically in the range of 15 - 20 degrees. Consequently, the minimum and maximum aperture diameter is a function of the sine of angle Θ.

Furthermore, to assure that the electrode securing wedges **154** remain spaced apart when not being compressed against an electrode, each of the electrode securing wedges is biased away from an adjacent wedge, and toward the conical interior surface of the tapered region, by at least one biasing member **164** between adjacent wedges. In one embodiment the biasing members are compression springs made of stainless steel and seated in recesses **142** in each of the planar surfaces **168** of the electrode securing wedges **154.** As will be appreciated, the resilient members **164** (e.g., coil compression spring) associated with each of the electrode securing wedges, biases the wedges toward the conical interior surface of the tapered region **134.** It will be further appreciated that while the resilient members **164** are depicted as lying between adjacent wedges **154,** or more particularly recesses **142** on the wedges, it is also possible to provide other wedge and spring configurations that bias the wedges so they tend to move outward (and therefore toward the larger diameter of the housing).

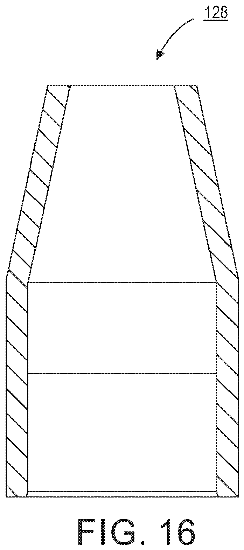

In summary, in the torch head body **130** of the adjustable electrode receiver, the electrode securing wedges **154** each include adjacent planar surfaces sharing a first edge or transition line **156** therebetween and each having an opposite edge **158** spaced away and slightly angled relative to the first edge, and a conical surface (**162,** rear of wedge in FIG. 16) spanning between the opposite edges of the planar surfaces **168,** and where at least one of the planar surfaces includes an aperture therein (to receive an end of the coil compression spring **164**). As will be further appreciated, the transition line **156,** between adjacent planar surfaces of the electrode securing wedge, provides a continuous region (e.g., along the line) for contact between the wedge and the electrode.

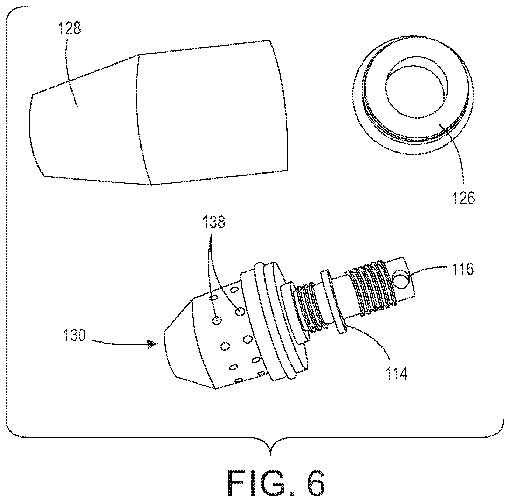

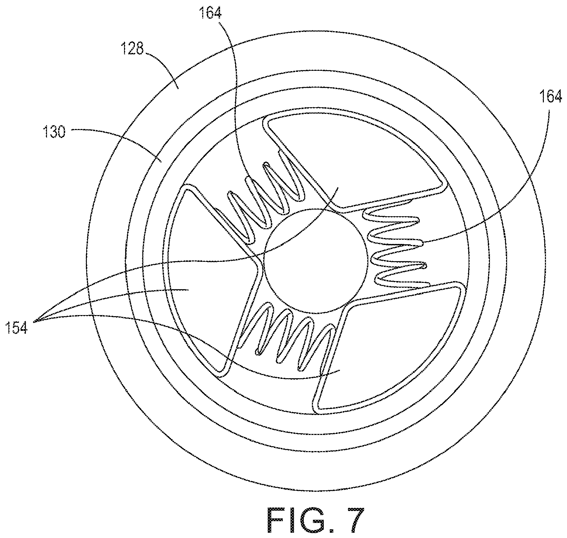

To assure the flow of electrical current through the torch head body **130** and into the wedges **154** and associated electrode **129,** the internal conical surface **134** remains in contact with each securing wedge over at least a portion if not all of the outer wedge surface, in order to reduce contact heating. In one embodiment the wedges are formed of an electrically conductive metal, such as an alloy - for example a steel alloy, a copper alloy (e.g., brass, bronze) or a nickel alloy. As illustrated in FIG. 7, one embodiment employs three electrode securing wedges **154** in the head **130.** And, the securing wedges **154** further provide electrical contact between electrode **120** and the conical surface **134** of the torch body **130.** In the embodiments depicted, for example in FIGS. 6. 7 and 18, the radially positioned electrode securing wedges **154** within the torch head body **130** are able to receive an electrode diameter of at least about 0.145 inches or larger.

As previously noted, the nozzle **128,** encircles the torch body to direct the inert gas along and through the torch head and the nozzle is operatively attached at one end thereof to the nozzle seat **126.**

In recapitulation, as illustrated in the figures, a removable torch head is provided with a variable sized electrode receiver is provided. A plurality of electrode securing wedges **154** are positioned radially within the torch head body **130** and form an aperture therebetween, where the aperture size is adjustable based upon the position of the wedges relative to an internal conical surface **134** within the body. Use of the disclosed embodiments is believed to result in improved productivity by at least eliminating the need to change collets when switching between various electrode diameters or shapes. Moreover, the replaceable head is easily installed and adapted for use with convention inert gas welding torches.

## Claims

1. A removable electric arc welding torch head (100) having an adjustable electrode receiver, comprising:
a hollow plunger (114), having a first end (116) for threadable connection to a welding torch;
a nozzle seat (126), surrounding and operatively connected about the first end (116) of the plunger (114);
a chuck back plate (146); a torch head body (130) including
a tapered interior region (134), a plurality of apertures (138) to permit gas flow therethrough, and a threaded inside diameter (142) to permit the operative engagement of the chuck back plate (146) thereon,
the chuck back plate (146) having an outer diameter for engaging the inner diameter of the torch body (130),
a plurality of radially positioned electrode securing wedges (154) forming an electrode aperture therebetween within the tapered interior region of the torch body (130) such that each securing wedge can traverse, in unison, a conical interior surface of the tapered region in a longitudinal direction to form a variable aperture therebetween, said securing wedges (154) being further contacted on an end thereof by a plunger thrust cup (160), the thrust cup in further combination with the plunger and back plate, translating rotation of the plunger relative to the back plate into linear motion of the thrust cup in contact with the electrode securing wedges, and further providing a clamping motion of the electrode securing wedges as a result of their contact with the tapered surface,
each of said electrode securing wedges (154) biased away from one another, by at least one biasing member (164) therebetween, and
an internal conical surface (134) in contact with each securing wedge, said securing wedges further providing electrical contact between an electrode and the conical surface (134) of the torch body (130); and
a nozzle (128), encircling the torch body (130) and operatively attached at one end thereof to the nozzle seat (126).

2. The removable electric arc welding torch head (100) according to claim 1 where each of the electrode securing wedges (154) further includes at least one surface feature to receive a portion of the biasing member (164) therein.

3. The removable electric arc welding torch head (100) according to claim 1 where said hollow plunger (114) is suitable for threaded connection to a conventional torch.

4. The removable electric arc welding torch head (100) according to claim 3 in combination with a conventional torch, where said conventional torch is selected from the group consisting of an HW20 torch and a WP 20 torch.

5. The removable electric arc welding torch head (100) according to claim 1 where a combination of said torch body (130) and said plurality of radially positioned electrode securing wedges (154) are able to receive an electrode having a diameter up to at least 3.68 mm (0.145 inches).

6. The removable electric arc welding torch head (100) according to claim 1 where said plurality of radially positioned electrode securing wedges (154) are each formed of an alloy.

7. The removable electric arc welding torch head (100) according to claim 1 where said nozzle (128) is formed of a machinable ceramic material.

8. The removable electric arc welding torch head (100) according to claim 1 where said nozzle (128) is formed of a material suitable for high-temperature use; preferably where said material suitable for high-temperature use is a glass-filled polytetrafluoroethylene (PTFE).

9. The removable electric arc welding torch head (100) according to claim 1 where said nozzle seat (126) is formed of a material suitable for high-temperature use; preferably where said material suitable for high-temperature use is a glass-filled polytetrafluoroethylene (PTFE).

10. The removable electric arc welding torch head (100) according to claim 1 where said at least one biasing member (164) is a coil spring positioned between adjacent electrode securing wedges.

11. The removable electric arc welding torch head (100) according to claim 1 including at least three electrode securing wedges (154).

12. The removable electric arc welding torch head (100) according to claim 11 wherein each of said electrode securing wedges (154) includes adjacent planar surfaces each sharing a first edge or transition therebetween and each having an opposite edge spaced away and slightly angle relative to the first edge, and a conical surface spanning between the opposite edges of the planar surfaces.

13. The removable electric arc welding torch head (100) according to claim 12 wherein the first edge or transition between adjacent planar surfaces of the electrode securing wedge (154) provides a continuous region of contact with the electrode.

14. The removable electric arc welding torch head (100) according to claim 1 wherein the apertures (138) of the torch head body (130) facilitate in use movement of inert gas through and around the torch head body (130).

15. The removable electric arc welding torch head (100) according to claim 1 wherein said nozzle (128) is associated with the torch body nozzle seat (126), and is removably affixed to the nozzle seat (126) and torch body (130) by friction fit thereto.

## Patentansprüche

1. Abnehmbarer elektrischer Lichtbogenschweißbrennerkopf (100) mit einstellbarem Elektrodenempfänger, umfassend:
einen hohlen Kolben (114), der ein erstes Ende (116) zur Schraubverbindung mit einem Schweißbrenner aufweist;
einen Düsensitz (126), der das erste Ende (116) des Kolbens (114) umgibt und betriebsmäßig mit diesem verbunden ist;
eine Spannfutterplatte (146);
einen Brennerkopfkörper (130), der einen sich verjüngenden Innenbereich (134), eine Vielzahl von Öffnungen (138), um eine Gasströmung dort hindurch zu ermöglichen, und einen mit Gewinde versehenen Innendurchmesser (142),
um den betriebsmäßigen Eingriff der Spannfutterplatte (146) daran zu ermöglichen, einschließt,
wobei die Spannfutterplatte (146) einen Außendurchmesser zum Eingreifen in den Innendurchmesser des Brennerkörpers (130) aufweist,
eine Vielzahl von radial positionierten Elektrodensicherungskeilen (154), die eine Elektrodenöffnung dazwischen innerhalb des sich verjüngenden Innenbereichs des Brennerkörpers (130) bilden, so dass jeder Sicherungskeil übereinstimmend eine konische Innenoberfläche des sich verjüngenden Bereichs in einer Längsrichtung durchqueren kann, um eine variable Öffnung dazwischen zu bilden, wobei die Sicherungskeile (154) ferner an einem Ende davon mit einer Kolben-Druckschale (160) in Kontakt stehen, wobei die Druckschale in weiterer Kombination mit dem Kolben und der Futterplatte eine Drehung des Kolbens relativ zur Futterplatte in eine lineare Bewegung der Druckschale, die mit den Elektrodensicherungskeilen in Kontakt steht, umsetzt und ferner eine Klemmbewegung der Elektrodensicherungskeile als Ergebnis ihres Kontakts mit der sich verjüngenden Oberfläche vorsieht,
wobei jeder der Elektrodensicherungskeile (154) durch mindestens ein Vorspannelement (164) dazwischen voneinander weg vorgespannt ist und eine innere konische Oberfläche (134) in Kontakt mit jedem Sicherungskeil steht,
wobei die Sicherungskeile ferner einen elektrischen Kontakt zwischen einer Elektrode und der konischen Oberfläche (134) des Brennerkörpers (130) bereitstellen; und
eine Düse (128), die den Brennerkörper (130) einkreist und an einem Ende davon betriebsmäßig an dem Düsensitz (126) befestigt ist.

2. Abnehmbarer elektrischer Lichtbogenschweißbrennerkopf (100) nach Anspruch 1, wobei jeder der Elektrodensicherungskeile (154) ferner mindestens ein Oberflächenmerkmal einschließt, um einen Abschnitt des Vorspannelements (164) darin aufzunehmen.

3. Abnehmbarer elektrischer Lichtbogenschweißbrennerkopf (100) nach Anspruch 1, wobei der hohle Kolben (114) zur Gewindeverbindung mit einem herkömmlichen Brenner geeignet ist.

4. Abnehmbarer elektrischer Lichtbogenschweißbrennerkopf (100) nach Anspruch 3 in Kombination mit einem herkömmlichen Brenner, wobei der herkömmliche Brenner aus der Gruppe ausgewählt ist, die aus einem HW20-Brenner und einem WP20-Brenner besteht.

5. Abnehmbarer elektrischer Lichtbogenschweißbrennerkopf (100) nach Anspruch 1, wobei eine Kombination aus dem Brennerkörper (130) und der Vielzahl von radial positionierten Elektrodensicherungskeilen (154) in der Lage ist, eine Elektrode mit einem Durchmesser von bis zu mindestens 3,68 mm (0,145 Zoll) aufzunehmen.

6. Abnehmbarer elektrischer Lichtbogenschweißbrennerkopf (100) nach Anspruch 1, wobei die Vielzahl von radial positionierten Elektrodensicherungskeilen (154) jeweils aus einer Legierung gebildet ist.

7. Abnehmbarer elektrischer Lichtbogenschweißbrennerkopf (100) nach Anspruch 1, wobei die Düse (128) aus einem maschinell bearbeitbaren Keramikmaterial gebildet ist.

8. Abnehmbarer elektrischer Lichtbogenschweißbrennerkopf (100) nach Anspruch 1, wobei die Düse (128) aus einem Material gebildet ist, das für Hochtemperaturanwendungen geeignet ist; wobei das für Hochtemperaturanwendungen geeignete Material vorzugsweise glasgefülltes Polytetrafluorethylen (PTFE) ist.

9. Abnehmbarer elektrischer Lichtbogenschweißbrennerkopf (100) nach Anspruch 1, wobei der Düsensitz (126) aus einem Material gebildet ist, das für Hochtemperaturanwendungen geeignet ist; wobei das für Hochtemperaturanwendungen geeignete Material vorzugsweise glasgefülltes Polytetrafluorethylen (PTFE) ist.

10. Abnehmbarer elektrischer Lichtbogenschweißbrennerkopf (100) nach Anspruch 1, wobei das mindestens eine Vorspannelement (164) eine Schraubenfeder ist, die zwischen benachbarten Elektrodensicherungskeilen positioniert ist.

11. Abnehmbarer elektrischer Lichtbogenschweißbrennerkopf (100) nach Anspruch 1, der mindestens drei Elektrodensicherungskeile (154) einschließt.

12. Abnehmbarer elektrischer Lichtbogenschweißbrennerkopf (100) nach Anspruch 11, wobei jeder der Elektrodensicherungskeile (154) benachbarte ebene Oberflächen einschließt, die jeweils eine erste Kante oder einen Übergang dazwischen haben und jeweils eine gegenüberliegende Kante aufweisen, die von der ersten Kante beabstandet ist und einen leichten Winkel dazu bildet, und eine konische Oberfläche, die sich zwischen den gegenüberliegenden Kanten der ebenen Oberflächen erstreckt.

13. Abnehmbarer elektrischer Lichtbogenschweißbrennerkopf (100) nach Anspruch 12, wobei die erste Kante oder der Übergang zwischen benachbarten ebenen Oberflächen der Elektrodensicherungskeile (154) einen durchgehenden Kontaktbereich mit der Elektrode bereitstellt.

14. Abnehmbarer elektrischer Lichtbogenschweißbrennerkopf (100) nach Anspruch 1, wobei die Öffnungen (138) des Brennerkopfkörpers (130) beim Gebrauch die Bewegung des Inertgases durch und um den Brennerkopfkörper (130) erleichtern.

15. Abnehmbarer elektrischer Lichtbogenschweißbrennerkopf (100) nach Anspruch 1, wobei die Düse (128) mit dem Brennerkörperdüsensitz (126) verbunden ist und abnehmbar an dem Düsensitz (126) und an dem Brennerkörper (130) durch Reibpassung daran angebracht ist.

## Revendications

1. Tête de torche de soudage à l'arc électrique amovible (100) ayant un récepteur d'électrode réglable, comprenant :
un piston creux (114), ayant une première extrémité (116) pour un raccordement filetable à une torche de soudage ;
un siège de buse (126), entourant et fonctionnellement relié autour de la première extrémité (116) du piston (114) ;
une plaque arrière de mandrin (146) ;
un corps de tête de torche (130) comprenant une région intérieure effilée (134),
une pluralité d'ouvertures (138) pour permettre l'écoulement du gaz à travers celles-ci, et un diamètre intérieur fileté (142) pour permettre l'engagement opérationnel de la plaque arrière de mandrin (146) sur celui-ci,
la plaque arrière de mandrin (146) ayant un diamètre extérieur pour engager le diamètre intérieur du corps de torche (130),
une pluralité de cales de fixation d'électrode positionnées radialement (154) formant une ouverture d'électrode entre elles dans la région intérieure effilée du corps de torche (130) de sorte que chaque cale de fixation puisse traverser, à l'unisson, une surface intérieure conique de la région effilée dans une direction longitudinale pour former une ouverture variable entre elles, lesdites cales de fixation (154) étant en outre en contact sur une extrémité de celles-ci par une coupelle de poussée de piston (160), la coupelle de poussée en combinaison supplémentaire avec le piston et la plaque arrière, traduisant la rotation du piston par rapport à la plaque arrière en un mouvement linéaire de la coupelle de poussée en contact avec les cales de fixation d'électrode, et fournissant en outre un mouvement de serrage des cales de fixation d'électrode en raison de leur contact avec la surface effilée,
chacune desdites cales de fixation d'électrode (154) sollicitées dans une direction opposée l'une de l'autre, par au moins un élément de sollicitation (164) entre elles, et une surface conique interne (134) en contact avec chaque cale de fixation, lesdites cales de fixation assurant en outre un contact électrique entre une électrode et la surface conique (134) du corps de torche (130) ; et
une buse (128), encerclant le corps de torche (130) et fixée fonctionnellement au niveau d'une de ses extrémités au siège de buse (126).

2. Tête de torche de soudage à l'arc électrique amovible (100) selon la revendication 1, dans laquelle chacune des cales de fixation d'électrode (154) comprend en outre au moins une caractéristique de surface pour recevoir une portion de l'élément de sollicitation (164) à l'intérieur.

3. Tête de torche de soudage à l'arc électrique amovible (100) selon la revendication 1, dans laquelle ledit piston creux (114) est approprié pour un raccordement fileté à une torche conventionnelle.

4. Tête de torche de soudage à l'arc électrique amovible (100) selon la revendication 3, en combinaison avec une torche conventionnelle, dans laquelle ladite torche conventionnelle est sélectionnée dans le groupe constitué d'une torche HW20 et une torche WP 20.

5. Tête de torche de soudage à l'arc électrique amovible (100) selon la revendication 1, dans laquelle une combinaison dudit corps de torche (130) et de ladite pluralité de cales de fixation d'électrode positionnées radialement (154) est capable de recevoir une électrode ayant un diamètre allant jusqu'à au moins 3,68 mm (0,145 pouces).

6. Tête de torche de soudage à l'arc électrique amovible (100) selon la revendication 1, dans laquelle ladite pluralité de cales de fixation d'électrode positionnées radialement (154) sont chacune formées d'un alliage.

7. Tête de torche de soudage à l'arc électrique amovible (100) selon la revendication 1, dans laquelle ladite buse (128) est formée d'un matériau céramique usinable.

8. Tête de torche de soudage à l'arc électrique amovible (100) selon la revendication 1, dans laquelle ladite buse (128) est formée d'un matériau approprié pour une utilisation à haute température ; de préférence, dans laquelle ledit matériau approprié pour une utilisation à haute température est un polytétrafluoroéthylène (PTFE) rempli de verre.

9. Tête de torche de soudage à l'arc électrique amovible (100) selon la revendication 1, dans laquelle ledit siège de buse (126) est formé d'un matériau approprié pour une utilisation à haute température ; de préférence, dans laquelle ledit matériau approprié pour une utilisation à haute température est un polytétrafluoroéthylène (PTFE) rempli de verre.

10. Tête de torche de soudage à l'arc électrique amovible (100) selon la revendication 1, dans laquelle ledit au moins un élément de sollicitation (164) est un ressort hélicoïdal positionné entre des cales adjacentes de fixation d'électrode.

11. Tête de torche de soudage à l'arc électrique amovible (100) selon la revendication 1, comprenant au moins trois cales de fixation d'électrode (154).

12. Tête de torche de soudage à l'arc électrique amovible (100) selon la revendication 11, dans laquelle chacune desdites cales de fixation d'électrode (154) comprend des surfaces planes adjacentes partageant chacune un premier bord ou une transition entre elles et ayant chacune un bord opposé espacé et légèrement incliné par rapport au premier bord, et une surface conique s'étendant entre les bords opposés des surfaces planes.

13. Tête de torche de soudage à l'arc électrique amovible (100) selon la revendication 12, dans laquelle le premier bord ou la transition entre les surfaces planes adjacentes de la cale de fixation d'électrode (154) fournit une région continue de contact avec l'électrode.

14. Tête de torche de soudage à l'arc électrique amovible (100) selon la revendication 1, dans laquelle les ouvertures (138) du corps de tête de torche (130) facilitent, lors de l'utilisation, le mouvement du gaz inerte à travers et autour du corps de tête de torche (130).

15. Tête de torche de soudage à l'arc électrique amovible (100) selon la revendication 1, dans laquelle ladite buse (128) est associée au siège de buse de corps de torche (126), et elle est fixée de manière amovible au siège de buse (126) et au corps de torche (130) par ajustement par friction sur ceux-ci.
